# EUROPÄISCHE PATENTSCHRIFT

(11) **EP 3 163 174 B1**
(45) Veröffentlichungstag und Bekanntmachung des Hinweises auf die Patenterteilung: **19.12.2018**
(21) Anmeldenummer: 17000266.1
(22) Anmeldetag: 20.02.2017
(51) Int. Cl.: A47J 27/04, A47J 27/12, G05B 15/02, H05B 6/06, H05B 6/64, F24C 7/08, F24C 11/00

(54) **GARGERÄTEANORDNUNG ZUR ZUBEREITUNG VON MINDESTENS ZWEI GARGÜTERN**
ARRANGEMENT OF COOKING APPARATUSES FOR THE PREPARATION OF AT LEAST TWO PRODUCTS TO BE COOKED
ARRANGEMENT D'APPAREILS DE CUISSON POUR LA PRÉPARATION D'AU MOINS DEUX PRODUITS A CUIRE

(43) Veröffentlichungstag der Anmeldung: 03.05.2017
(73) Patentinhaber: V-Zug AG, 6300 Zug (CH)
(72) Erfinder: Schönenberger, Marc, 8050 Zürich (CH)
(74) Vertreter: Sutter, Kurt

(56) Entgegenhaltungen:
- EP-A1- 2 213 175
- EP-A2- 1 849 365
- DE-A1-102015 103 504
- GB-A- 2 380 923
- US-A- 4 390 965

## Beschreibung

### Gebiet der Erfindung

Die Erfindung betrifft eine Anordnung und ein Verfahren zur Zubereitung von mindestens zwei Gargütern umfassend mindestens zwei Gargeräte, insbesondere einen Backofen, ein Dampfgargerät, ein Mikrowellengargerät, ein Kombigargerät und/oder ein Kochfeld. Im Weiteren umfasst die Anordnung eine Eingabevorrichtung zur Eingabe der mindestens zwei zu garenden Gargüter, eine Steuereinheit und eine Ausgabevorrichtung.

### Hintergrund

Es ist bekannt, dass in Kochrezepten aufgeführt wird, welche Gargüter in welchen Gargeräten zu garen sind. Diese Rezepte können auch elektronisch gespeichert sein und dem Benutzer beispielsweise über ein Display an einem Gargerät in zeitlicher Abfolge anzeigen, welches oder welche Gargüter zu welchem Zeitpunkt unter welchen Garbedingungen in das jeweilige Gargerät eingeschoben werden müssen.

Dokumente DE102015103504 A1, EP2213175 A1, US4390965 A und EP1849365 A2 stellen darüber hinaus einen für die Erfindung relevanten Stand der Technik dar.

### Darstellung der Erfindung

Der Erfindung liegt die Aufgabe zugrunde, eine Anordnung von Gargeräten bereitzustellen, welche das Garen mehrerer Gargüter vereinfacht.

Diese Aufgabe wird durch die Anordnung gemäss dem unabhängigen Vorrichtungsanspruch gelöst.

Demgemäss umfasst eine Anordnung zur Zubereitung von mindestens zwei Gargütern
- mindestens zwei Gargeräte. Diese können insbesondere ein Backofen, ein Dampfgargerät, ein Mikrowellengargerät, ein Kombigargerät und/oder ein Kochfeld sein, wobei von jedem Gargerätetyp auch mehrere Gargeräte vorhanden sein können. Unter einem Kombigargerät ist ein Gargerät zu verstehen, welches mehrere Garmethoden umfasst. Beispielsweise kann ein Kombigargerät sowohl eine Dampffunktion als auch eine Mikrowellenfunktion aufweisen.
- mindestens eine Steuereinheit mit einem Datenspeicher,
- mindestens eine Eingabevorrichtung zur Eingabe der mindestens zwei zu garenden Gargüter. Dabei kann es sich beispielsweise um einen Touchscreen oder um eine Tastatur handeln, über welche der Steuereinheit mitgeteilt werden kann, welche Gargüter gegart werden sollen.
- mindestens eine Ausgabevorrichtung, welche beispielsweise als Display ausgestaltet sein kann.

Die Steuereinheit ist derart ausgestaltet, dass mittels der Steuereinheit
- bestimmbar ist, ob mindestens zwei der zu garenden Gargüter in einem der Gargeräte zumindest teilweise gleichzeitig gegart werden können,
- abhängig davon die zu garenden Gargüter den Gargeräten zuweisbar sind, und
- mittels der Ausgabevorrichtung ausgebbar ist, welche der zu garenden Gargüter in welchem oder in welchen Gargeräten zu garen sind.

Eine solche Anordnung hat den Vorteil, dass die zu garenden Gargüter effizient auf die Gargeräte verteilt werden. Durch die Bestimmung, ob mindestens zwei der zu garenden Gargüter in einem der Gargeräte zumindest teilweise gleichzeitig gegart werden können, wird die Anzahl der für das Garen notwendiger Gargeräte reduziert. Daraus resultiert ein geringer Stromverbrauch, nach dem Garen müssen nur wenige Gargeräte gereinigt werden, oder falls mehr Gargüter als Gargeräte zur Verfügung stehen, ist ein gleichzeitiges Garen aller Gargüter dennoch möglich.

Unter einem Gargerät ist eine Gareinheit zu verstehen, welche eine einzelne Garatmosphäre aufweist. Ein Gargerät kann beispielsweise ein Backofen sein, mit einem einzigen Garraum, in welchem eine bestimmte Lufttemperatur eingestellt werden kann.

Im Weiteren können im Datenspeicher den mindestens zwei Gargütern für die Gargeräte jeweils Garparameter zugeordnet sein. Insbesondere umfassen die Garparameter einen bestimmten Wert und/oder ein Werte-Intervall.

Das Vorhandensein von Garparametern für unterschiedliche Gargeräte für unterschiedliche Gargüter eröffnet der Steuereinheit die Möglichkeit, die Garbedingungen der einzelnen Gargüter miteinander zu vergleichen und aufgrund dessen zu bestimmen, welche Gargüter im gleichen Gargerät gegart werden können. Durch die Angabe von Werte-Intervallen, in welchen das jeweilige Gargut gegart werden kann, ist die Wahrscheinlichkeit grösser, dass sich zwei Werte-Intervalle zweier Gargüter teilweise überschneiden und somit beide Gargüter in der gleichen Garatmosphäre bzw. im gleichen Gargerät gegart werden können.

Vorteilhaft kann die Steuereinheit nach Zuweisung der Gargüter zu den Gargeräten über die Ausgabevorrichtung ausgeben, mittels welchen Garparametern in den jeweiligen Gargeräten zu garen ist. Alternativ kann die Steuereinheit die Garparameter bei den einzelnen Gargeräten über eine Kommunikationsvorrichtung direkt einstellen.

Mit Vorteil ist im Datenspeicher den Gargütern ein Prioritätswert zugeordnet, welcher die Information umfasst, welches Gargerät für das jeweilige Gargut prioritär zu verwenden ist. Dies hat den Vorteil, dass die Steuereinheit ein Gargut den Gargeräten optimaler zuweisen kann, falls das Gargut in unterschiedlichen Gargeräten gegart werden kann. Beispielsweise führt das Garen eines Gemüses in einem Dampfgargerät zu einem besseren Garergebnis, als in einem Backofen, womit diesem Gemüse für das Dampfgargerät ein höherer Prioritätswert zugeordnet ist.

Vorteilhaft ist die Steuereinheit derart ausgestaltet, dass mindestens eine Gruppe erzeugbar ist, welcher Gargüter der zu garenden Gargüter, welche in einem der Gargeräten zumindest teilweise gleichzeitig gegart werden können, zugeordnet sind. Insbesondere ist eine der mindestens einen erzeugten Gruppe mindestens einem der Gargeräte zuweisbar.

Im Weiteren kann die Steuereinheit derart ausgestaltet sein, dass zu garende Gargüter, welche nicht einer der mindestens einen Gruppe zuordenbar sind, einem Gargerät, insbesondere einem Kochfeld, welchem keine Gruppe zugewiesen ist, zuweisbar ist.

Die eingangs erwähnte Aufgabe wird auch durch das Verfahren nach unabhängigen Verfahrensanspruch gelöst. Demgemäss weist das Verfahren die folgenden Schritte auf:

Die Steuereinheit,
- bestimmt, ob mindestens zwei der mindestens zwei zu garenden Gargüter in einem der mindestens zwei Gargeräte zumindest teilweise gleichzeitig gegart werden können,
- weist in Abhängigkeit davon den mindestens zwei Gargeräten die mindestens zwei zu garenden Gargüter zu, und
- gibt über die Ausgabevorrichtung aus, welche der mindestens zwei zu garenden Gargüter in welchem oder in welchen Gargeräten zu garen sind.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Anordnung von sieben Gargeräten, und
Fig. 2 eine Zuordnung von Garparametern für verschiedene Gargeräte.

### Weg zur Ausführung der Erfindung

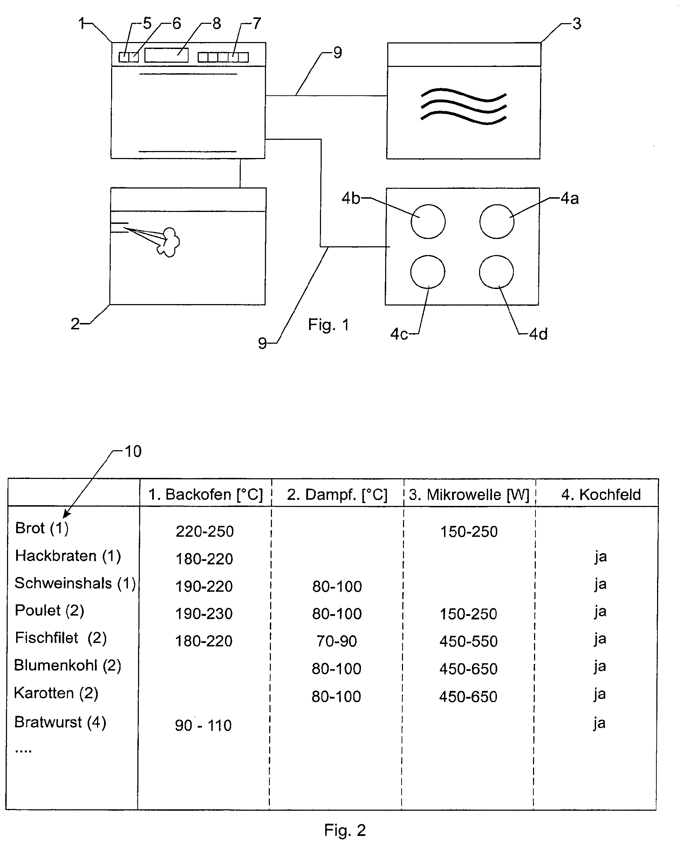

In Fig. 1 wird eine Anordnung von sieben Gargeräten gezeigt. Die Anordnung umfasst einen Backofen 1, ein Dampfgargerät 2, ein Mikrowellengargerät 3 und vier Kochfelder 4a-4d, wobei jedes Kochfeld 4a-4d als ein Gargerät bezeichnet wird, da auf jedem Kochfeld 4a-4d mit unterschiedlichen Garbedingungen unterschiedliche Gargüter gegart werden können.

Die Anordnung umfasst weiter eine Steuereinheit 5, einen Datenspeicher 6, eine Eingabevorrichtung 7 und eine Ausgabevorrichtung 8. Diese Komponenten sind im vorliegenden Ausführungsbeispiel am Backofen 1 angeordnet. Mittels der Eingabevorrichtung 7 kann der Benutzer der Steuereinheit 5 mitteilen, welche Gargüter mittels den zur Verfügung stehenden Gargeräten gegart werden sollen. Nach Zuweisung der einzelnen Gargüter zu den Gargeräten gibt die Steuereinheit 5 über die Ausgabevorrichtung 8 aus, in welchen Gargeräten welche Gargüter zu garen sind. Im Weiteren können auch die Garparameter ausgegeben werden, mit welchen die Gargeräte betrieben werden sollen. Die Steuereinheit kann auch über eine Kommunikationsvorrichtung 9 den einzelnen Gargeräten die Garparameter direkt übermitteln und diese zu einem gewünschten Zeitpunkt starten.

In Fig. 2 wird der Inhalt des Datenspeichers 6 dargestellt. In tabellarischer Form werden unterschiedlichen Gargütern Garparameter für unterschiedliche Gargeräte zugeordnet. In der ersten Spalte von links ist den Gargütern auch jeweils ein Prioritätswert 10 zugeordnet, welcher aussagt, mit welchem Gargerät das Gargut bevorzugt zu garen ist. Die Prioritätswerte 10 geben an, in welchem Gargerät das jeweilige Gargut bevorzugt gegart werden soll, sofern mehrere Gargeräte zur Verfügung stehen. Jedem Gargut könnten auch mehrere Prioritätswerte 10 zugeordnet sein, sodass nicht nur das bevorzugte Gargerät definiert ist, sondern dass die zur Verfügung stehenden Gargeräte in mehreren Abstufungen priorisiert sind.

Im Folgenden soll die Funktionsweise der Anordnung anhand einiger Gargutkombinationen näher beschrieben werden. Für die Beispiele stehen dem Benutzer jeweils alle Gargeräte aus Fig. 1 zur Verfügung.

Beispielsweise möchte der Benutzer ein Poulet und einen Blumenkohl garen. Die Steuereinheit stellt anhand der im Datenspeicher abgelegten Tabelle nach Fig. 2 fest, dass das Poulet und der Blumenkohl gleichzeitig im Dampfgargerät 2 im Temperaturintervall von 80-100°C gegart werden können. Somit können zwei Gargüter lediglich anhand eines einzelnen Gargeräts zubereitet werden.

Im zweiten Beispiel möchte der Benutzer Brot, Fischfilet und Blumenkohl gleichzeitig garen. Es besteht nun die Möglichkeit, das Brot und das Fischfilet gemeinsam bei 220° im Backofen 1 zu garen, oder das Fischfilet und der Blumenkohl gemeinsam bei 80-90°C im Dampfgargerät 2 oder mit 450-650 W in der Mikrowelle 3 zu garen. Da dem Fischfilet der Prioritätswert 2 zugeordnet ist, das heisst, dass das Fischfilet bevorzugt im Dampfgargerät 2 gegart werden soll, weist die Steuereinheit 5 das Fischfilet und den Blumenkohl dem Dampfgargerät 2 zu. Das Dampfgargerät 2 wird dabei mit einer Temperatur von 80-90°C betrieben. Das Brot kann nicht in dieser Dampfatmosphäre gegart werden. Es weist den Prioritätswert 1 auf, weshalb die Steuereinheit das Brot dem Backofen 1 und nicht der Mikrowelle 3 zuweist. Demnach können drei Gargüter in lediglich zwei Gargeräten gegart werden.

In einem dritten Beispiel möchte der Benutzer eine Bratwurst, Karotten und ein Brot garen. Die Steuereinheit erkennt keine überlappenden Temperaturintervalle der einzelnen Gargüter für ein bestimmtes Gargerät, sodass entsprechend den Prioritätswerten das Brot dem Backofen 1, die Karotten dem Dampfgargerät 2 und die Bratwurst dem Kochfeld 4 zugewiesen werden.

Bei der Zuweisung bildet die Steuereinheit für die einzelnen Gargeräte jeweils Gruppen, in welche die Gargüter eingeordnet werden. Diese Gruppenzuordnung kann anschliessend über die Ausgabevorrichtung 8 angezeigt werden.

Wird beabsichtigt, sämtliche Gargüter zu einem gemeinsamen Zeitpunkt zu Ende zu garen, so kann die Steuereinheit ausgeben, zu welchen Zeitpunkten welche Gargüter in welche Gargeräte einzuschieben sind. Werden mehrere Gargüter in einem einzelnen Gargerät gegart, so können die Gargüter zu unterschiedlichen Zeitpunkten eingeschoben werden.

Während in der vorliegenden Anmeldung bevorzugte Ausführungen der Erfindung beschrieben sind, ist klar darauf hinzuweisen, dass die Erfindung nicht auf diese beschränkt ist und in auch anderer Weise innerhalb des Umfangs der folgenden Ansprüche ausgeführt werden kann.

## Patentansprüche

1. Anordnung zur Zubereitung von mindestens zwei Gargütern umfassend
- mindestens zwei Gargeräte (1-4), insbesondere einen Backofen (1), ein Dampfgargerät (2), ein Mikrowellengargerät (3), ein Kombigargerät und/oder ein Kochfeld (4a-4d),
- mindestens eine Steuereinheit (5) mit einem Datenspeicher (6),
- mindestens eine Eingabevorrichtung (7) zur Eingabe der mindestens zwei zu garenden Gargüter,
- mindestens eine Ausgabevorrichtung (8),
**dadurch gekennzeichnet, dass** die Steuereinheit (5) derart ausgestaltet ist, dass mittels der Steuereinheit (5)
- bestimmbar ist, ob mindestens zwei der zu garenden Gargüter in einem der Gargeräte (1-4) zumindest teilweise gleichzeitig gegart werden können,
- abhängig davon die zu garenden Gargüter den Gargeräten (1-4) zuweisbar sind, und
- mittels der Ausgabevorrichtung (8) ausgebbar ist, welche der zu garenden Gargüter in welchem oder in welchen Gargeräten zu garen sind.

2. Anordnung nach Anspruch 1, wobei im Datenspeicher (6) den mindestens zwei Gargütern für die Gargeräte (1-4) jeweils Garparameter zugeordnet sind.

3. Anordnung nach Anspruch 2, wobei die Garparameter einen bestimmten Wert und/oder ein Werte-Intervall umfassen.

4. Anordnung nach einem der vorangehenden Ansprüche, wobei im Datenspeicher (6) den Gargütern ein Prioritätswert zugeordnet ist, welcher die Information umfasst, welches Gargerät (1-4) für das jeweilige Gargut prioritär zu verwenden ist.

5. Anordnung nach Anspruch 4, wobei die Steuereinheit (5) derart ausgestaltet ist, dass abhängig vom Prioritätswert die mindestens zwei zu garenden Gargüter den Gargeräten (1-4) zuweisbar sind.

6. Anordnung nach einem der vorangehenden Ansprüche, wobei die Steuereinheit (5) derart ausgestaltet ist, dass mindestens eine Gruppe erzeugbar ist, welcher Gargüter der zu garenden Gargüter, welche in einem der Gargeräten (1-4) zumindest teilweise gleichzeitig gegart werden können, zugeordnet sind.

7. Anordnung nach Anspruch 6, wobei die Steuereinheit (5) derart ausgestaltet ist, dass mindestens eine der mindestens einen erzeugten Gruppe mindestens einem der Gargeräte (1-4) zuweisbar ist.

8. Anordnung nach Anspruch 7, wobei die Steuereinheit (5) derart ausgestaltet ist, dass zu garende Gargüter, welche nicht einer der mindestens einen Gruppe zuordenbar sind, einem Gargerät (1-4), insbesondere einem Kochfeld (4), welchem keine Gruppe zugewiesen ist, zuweisbar ist.

9. Anordnung nach einem der vorangehenden Ansprüche, wobei die Anordnung eine Kommunikationsvorrichtung (9) aufweist, über welche die Garparameter mittels der Steuereinheit (5) an die jeweiligen Gargeräte (1-4) übermittelbar sind.

10. Verfahren zur Zubereitung von mindestens zwei Gargütern mit einer Anordnung mit mindestens zwei Gargeräten (1-4), insbesondere mit einem Backofen (1), einem Dampfgargerät (2), einem Mikrowellengargerät (3), ein Kombigargerät und/oder einem Kochfeld (4), wobei die Anordnung eine Eingabevorrichtung (7) zur Eingabe von mindestens zwei zu garenden Gargütern, eine Steuereinheit (5) mit einem Datenspeicher (6) und eine Ausgabevorrichtung (8) aufweist,
wobei das Verfahren die folgenden Schritte aufweist: die Steuereinheit (5)
- bestimmt, ob mindestens zwei der mindestens zwei zu garenden Gargüter in einem der mindestens zwei Gargeräten (1-4) zumindest teilweise gleichzeitig gegart werden können,
- weist in Abhängigkeit davon den mindestens zwei Gargeräten (1-4) die mindestens zwei zu garenden Gargüter zu, und
- gibt über die Ausgabevorrichtung (8) aus, welche der mindestens zwei zu garenden Gargüter in welchem oder in welchen Gargeräten (1-4) zu garen sind.

11. Verfahren nach Anspruch 10, wobei die Anordnung einen Datenspeicher (6) umfasst, in welchem den Gargütern für die mindestens zwei Gargeräte (1-4) jeweils Garparameter zugeordnet sind, und insbesondere:
wobei die Garparameter einen bestimmten Wert und/oder ein Werte-Intervall umfassen,
und/oder wobei im Datenspeicher den mindestens zwei Gargütern ein Prioritätswert zugeordnet ist, welcher die Information umfasst, welches Gargerät (1-4) für das jeweilige Gargut prioritär zu verwenden ist.

12. Verfahren nach einem der Ansprüche 10 bis 11, wobei Gruppen erzeugt werden, denen Gargüter der zu garenden Gargüter, welche in einem der Gargeräte (1-4) zumindest teilweise gleichzeitig gegart werden können, zugeordnet werden.

13. Verfahren nach Anspruch 12, wobei mindestens eine der mindestens einen erzeugten Gruppe mindestens einem der Gargeräte (1-4) zugewiesen wird.

14. Verfahren nach Anspruch 13, wobei zu garende Gargüter, welche nicht innerhalb einer der mindestens einen Gruppe einem der Gargeräte (1-4) zugewiesen wurde, einem Gargerät (1-4), insbesondere einem Kochfeld (4), welchem keine Gruppe zugewiesen ist, zugewiesen wird.

## Claims

1. Arrangement for preparing at least two foodstuffs, comprising
- at least two cooking devices (1-4), particularly a cooking oven (1), a steam cooker (2), a microwave oven (3), a combination cooking device and/or a hob (4a-4d),
- at least one control unit (5) with a data storage (6),
- at least one input device (7) for specifying the at least two foodstuffs to be cooked,
- at least one output device (8),
**characterized in that** the control unit (5) is adapted to
- determine if at least two of the foodstuffs to be cooked can be cooked in one of the cooking devices (1-4) at least partly concurrently,
- depending on that, allocate the foodstuffs to be cooked to the cooking devices (1-4), and
- output, on the output device (8), which of the foodstuffs to be cooked have to be cooked in which cooking devices.

2. Arrangement of claim 1, wherein in the data storage (6) cooking parameters are attributed to the at least two foodstuffs for the cooking devices (1-4).

3. Arrangement of claim 2, wherein the cooking parameters comprise a certain value and/or a value interval.

4. Arrangement of one of the preceding claims, wherein in said data storage (6) a priority value is assigned to the foodstuffs, containing the information which cooking device (1-4) is preferred for the respective foodstuff.

5. Arrangement of claim 4, wherein the control unit (5) is adapted to allocate the at least two foodstuffs to the cooking devices (1-4) in dependence of said priority value.

6. Arrangement of one of the preceding claims, wherein the control unit (5) is adapted to generate at least one group to which foodstuffs of the foodstuffs that can be cooked at least partly concurrently in the same cooking device (1-4) are attributed.

7. Arrangement of claim 6, wherein the control unit (5) is adapted to allocate at least one of the at least one generated group to at least one of the cooking devices (1-4).

8. Arrangement of claim 7, wherein the control unit (5) is adapted to allocate foodstuffs that cannot be assigned to at least one of the at least one group, to a cooking device (1-4), in particular to a hob (4), to which no group is allocated.

9. Arrangement of one of the preceding claims, wherein the arrangement has a communication device (9), via which the cooking parameters can be communicated to the respective cooking devices by the control unit (5).

10. Method for preparing at least two foodstuffs by means of an arrangement with at least two cooking devices (1-4), particularly a cooking oven (1), a steam cooker (2), a microwave oven (3), a combination cooking device and/or a hob (4a-4d), wherein the apparatus comprises an input device (7) for specifying at least two foodstuffs, a control unit (5) with a data storage (6) and an output device (8),
wherein the method comprises the following steps:
the control unit (5)
- determines if at least two of the foodstuffs can be cooked at least partly concurrently in one of the at least two cooking devices (1-4),
- allocates depending on this the at least two foodstuffs to the at least two cooking devices (1-4), and
- outputs via the output device (8), which of the at least two foodstuffs have to be cooked in which cooking device or in which cooking devices (1-4).

11. Method of claim 10, wherein the arrangement comprises a data storage (6) in which cooking parameters are assigned to the foodstuffs for the at least two cooking devices (1-4), and particularly:
wherein the cooking parameters comprise a certain value and/or a value interval,
and/or wherein a priority value is assigned to the at least two foodstuffs in the data storage, wherein the priority value is indicative of which cooking device (1-4) is preferred for the respective foodstuff.

12. Method of one of the claims 10 to 11, wherein groups are generated, to which foodstuffs of the foodstuffs that can be cooked at least partly concurrently in the same cooking device (1-4) are attributed.

13. Method of claim 12, wherein at least one of the at least one generated group is attributed to at least one of the cooking devices (1-4).

14. Method of claim 13, wherein foodstuffs to be cooked, which have not been attributed to one of the cooking devices (1-4) within the at least one group, to a cooking device (1-4), in particular to a hob (4), to which no foodstuff is allocated.

## Revendications

1. Agencement pour préparer au moins deux produits à cuire, comprenant
- au moins deux dispositifs de cuisson (1-4), particulièrement un four de cuisson (1), un cuiseur vapeur (2), un four à microondes (3), une combinaison dispositif de cuisson et/ou une plaque de cuisson (4a-4d),
- au moins une unité de commande (5) avec un stockage de données (6),
- au moins un dispositif d'entrée (7) pour spécifier les au moins deux produits à cuire,
- au moins un dispositif de sortie (8),
**caractérisé en ce que** l'unité de commande (5) est adaptée à
- déterminer si au moins deux des produits à cuire peuvent être cuis dans un des dispositifs de cuisson (1-4) au moins partiellement simultanément,
- dépendant de cela, attribuer des produits à cuire aux dispositifs de cuisson (1-4), et
- sortir sur le dispositif de sortie (8) quel produit à cuire doit être cuit dans quel dispositif de cuisson.

2. Agencement selon la revendication 1, des paramètres de cuisson étant attribués aux au moins deux produits à cuire pour les dispositifs de cuisson (1-4) dans le stockage de données (6).

3. Agencement selon la revendication 2, les paramètres de cuisson ayant une certaine valeur et/ou un intervalle de valeurs.

4. Agencement selon l'une des revendications précédentes, une valeur de priorité étant attribuée aux produits à cuire dans le stockage de données (6), qui contiennent des informations quel dispositif de cuisson (1-4) est préféré pour le respectif produit à cuire.

5. Agencement selon la revendication 4, l'unité de commande (5) étant adaptée à attribuer les au moins deux produits à cuire aux dispositifs de cuisson (1-4) dépendant de ladite valeur de priorité.

6. Agencement selon l'une des revendications précédentes, l'unité de cuisson (5) étant adaptée à générer au moins un groupe auquel des produits parmi les produits qui peuvent être cuits au moins partiellement simultanément dans le même dispositif de cuisson (1-4) sont attribués.

7. Agencement selon la revendication 6, l'unité de commande (5) étant adaptée à attribuer au moins un de l'au moins un groupe généré à au moins un des dispositifs de cuisson (1-4).

8. Agencement selon la revendication 7, l'unité de commande (5) étant adaptée à attribuer des produits à cuire, qui ne peuvent pas être attribués à au moins un de l'au moins un groupe, particulièrement à une plaque de cuisson (4), à un dispositif de cuisson (1-4).

9. Agencement selon l'une des revendications précédentes, l'agencement ayant un dispositif de communication (9), par lequel les paramètres de cuisson sont envoyés aux respectifs dispositifs de cuisson (1-4) à l'aide de l'unité de commande (5).

10. Procédé pour préparer au moins deux produits à cuire par un agencement avec au moins deux dispositifs de cuisson (1-4), particulièrement un four de cuisson (1), un cuiseur vapeur (2), un four à microondes (3), une combinaison dispositif de cuisson et/ou une plaque de cuisson (4a-4d), l'agencement comprenant un dispositif d'entrée (7) pour spécifier au moins deux produits à cuire, une unité de commande (5) avec un stockage de données (6) et un dispositif de sortie (8),
le procédé comprenant les étapes suivantes:
l'unité de commande (5)
- détermine si au moins deux des produits à cuire peuvent être cuits au moins partiellement simultanément dans un des au moins deux dispositifs de cuisson (1-4),
- attribue, dépendant de cela, les au moins deux produits à cuire aux au moins deux dispositifs de cuisson (1-4), et
- sort par le dispositif de de sortie (8), quel produit à cuire des au moins deux produits à cuire doit être cuit dans quel dispositif de cuisson (1-4) ou dans quels dispositifs de cuisson.

11. Procédé selon la revendication 10, l'agencement comprenant un stockage de données (6) dans lequel des paramètres de cuisson sont attribués aux produits à cuire pour les au moins deux dispositifs de cuisson (1-4), et particulièrement:
les paramètres de cuisson comprenant une certaine valeur et/ou un intervalle de valeurs,
et/ou une valeur de priorité étant attribuée aux au moins deux produits à cuire dans le stockage de données, la valeur de priorité indiquant quel dispositif de cuisson (1-4) est préféré pour le respectif produit à cuire.

12. Procédé selon l'une des revendications 10 à 11, des groupes étant générés, auxquels des produits à cuire parmi les produits à cuire qui peuvent être cuits au moins partiellement simultanément dans le même dispositif de cuisson (1-4) sont attribués.

13. Procédé selon la revendication 12, au moins un d'au moins un groupe généré étant attribué à au moins un des dispositifs de cuisson (1-4).

14. Procédé selon la revendication 13, des produits à cuire, qui n'ont pas été attribués à un des dispositifs de cuisson (1-4) dans l'au moins un groupe, sont attribués à un dispositif de cuisson (1-4), particulièrement une plaque de cuisson (4), auquel aucun produit à cuire est attribué.
